# EUROPÄISCHE PATENTANMELDUNG

(11) **EP 2 949 494 A1**
(43) Veröffentlichungstag der Anmeldung: **02.12.2015**
(21) Anmeldenummer: 15163495.3
(22) Anmeldetag: 14.04.2015
(51) Int. Cl.: B60J 11/00, B05B 15/04, B60R 11/00

(54) **SCHNITTSTELLE ZU BEFESTIGUNG VON OPTIONEN UND ANBAUTEILEN**

(30) Priorität: 26.05.2014 DE 102014209985
(71) Anmelder: Jungheinrich Aktiengesellschaft, 22047 Hamburg (DE)
(72) Erfinder: Geiner, Richard, 84032 Altdorf (DE)
(74) Vertreter: Weickmann & Weickmann

(57) **Zusammenfassung**

Die Erfindung betrifft ein Fahrzeug, insbesondere Nutzfahrzeug, weiter insbesondere Flurförderfahrzeug, umfassend eine Schnittstelle zur Befestigung von Options- und Anbauteilen an dem Fahrzeug mittels eines Klebstoffs, wobei die Schnittstelle durch einen blanken Abschnitt an einer Oberfläche eines Bauteils des Fahrzeugs gebildet ist, welcher von einem mittels einer lösbaren Befestigung angebrachten Abdeckelement bedeckt ist, wobei das Abdeckelement und die Umgebung der Schnittstelle an der Oberfläche des Bauteils mit einer gemeinsamen Beschichtung bereitgestellt sind. Ferner betrifft die Erfindung ein Verfahren zum Bereitstellen einer solchen Schnittstelle.

## Beschreibung

Die Erfindung betrifft ein Fahrzeug, insbesondere ein Nutzfahrzeug, weiter insbesondere ein Flurförderfahrzeug, umfassend eine Schnittstelle zur Befestigung von Options- und Anbauteilen an dem Fahrzeug mittels eines Klebstoffs, wobei die Schnittstelle durch einen blanken Abschnitt an einer Oberfläche des Fahrzeugs gebildet ist, welcher von einem mittels einer lösbaren Befestigung angebrachten Abdeckelement bedeckt ist, wobei das Abdeckelement und die Umgebung der Schnittstelle an der Oberfläche des Bauteils mit einer gemeinsamen Beschichtung bereitgestellt sind.

Es ist in modernen Fahrzeugen, insbesondere auch in Flurförderfahrzeugen, wünschenswert, einen hohen Modularisierungsgrad der Fahrzeugkonstruktion zu erreichen, wodurch einerseits Herstellungskosten eingespart werden können, indem konfektionierte Komponenten und Optionsteile verwendet werden können, und es andererseits dem Käufer und Betreiber des Fahrzeugs gestattet wird, ohne aufwändige Nacharbeiten optionale Anbauteile auch nach Auslieferung noch an dem Fahrzeug anzubringen.

Gerade für Nutzfahrzeuge sind vielerlei externe Options- und Anbauteile in Gebrauch, die entweder bereits am Montageband oder nachträglich ("im Feld") an dem Fahrzeug befestigt werden. Als ebenso anschauliches wie einfaches Beispiel sei hier eine Halterung angeführt, die nachträglich optional an ein Flurförderfahrzeug angebracht werden kann, um während des Betriebs des Fahrzeugs einen Tablet-Computer oder ähnliches zu halten.

Um eine Schnittstelle für ein derartiges Befestigen von Anbauteilen an einem Fahrzeug bereitzustellen, sind diverse Möglichkeiten bekannt.

Einerseits ist es selbstverständlich möglich, dedizierte Schnittstellen wie Durchgangslöcher oder Gewindebohrungen bereits an dem Fahrzeug während seiner Herstellung vorzusehen. Dies erfordert allerdings einen erhöhten Aufwand, insbesondere bei der Lackierung der betroffenen Teile, an denen die Schnittstelle bereitgestellt wird, da je nach Ausgestaltung der Schnittstelle entweder schwer zu erreichende und demnach schwer zu lackierende Winkel und Nischen an den Teilen auftreten können, oder es andererseits gar nötig sein kann, Abschnitte der Teile von der Lackierung komplett auszunehmen, beispielsweise wenn es sich um ein Gewinde handelt, welches von dem Lack zuwachsen könnte.

Andererseits ist es auch bekannt, Halterungen für Anbauteile an geeigneten Stellen anzuschweißen. Dies wird in der Regel bereits bei Herstellung des Fahrzeugs durchgeführt, da ein Anschweißen von Teilen im Feld in der Regel nicht praktikabel ist. Hierbei ist es allerdings nötig, sich frühzeitig auf einen bestimmten Halterungstypen festzulegen, was die gewünschte Flexibilität der Schnittstelle deutlich einschränkt und auch dann gesteigerte Kosten verursacht, wenn das Options- und Anbauteil für das jeweilige Fahrzeug später gar nicht benötigt wird. Außerdem kann von hervorstehenden Halterungen im Betrieb eine Sicherheitsgefährdung ausgehen.

Angesichts der Tatsache, dass Klebstoffe mit wesentlich verbesserten Klebeeigenschaften sich auch im Fahrzeugbau immer mehr durchsetzen, besteht eine weitere Möglichkeit darin, das Anbauteil mittels direkten Klebens an einer Oberfläche eines Bauteils des Fahrzeugs anzubringen oder eine geeignete Halterung anzukleben. Hierbei besteht allerdings das Problem, dass diese Oberfläche in der Regel lackiert sein wird und damit keine geeigneten Klebeeigenschaften aufweist. Somit muss an der vorgesehenen Position an dem Fahrzeug zur Vorbereitung des Anklebens zunächst der Lack abgeschliffen werden, um einen blanken Oberflächenbereich bereitzustellen, auf dem eine ausreichende Klebefestigkeit erreichbar ist. Dies stellt einerseits einen erhöhten Aufwand insbesondere im Feld dar und bringt andererseits die Gefahr eines Beschädigen des Lacks um die vorgesehene Schnittstelle herum mit sich, was als Folge zu einer erhöhten Korrosion der abgeschliffenen Bereiche führen wird. Lässt man einen zum Ankleben von Anbauteilen vorgesehenen Oberflächenbereich bereits von Anfang an unlackiert, so muss in diesem Bereich zwar nicht der Lack abgeschliffen werden, allerdings wird es dennoch unerlässlich sein, die Oberfläche von Korrosionsschutzmittel oder Korrosion zu befreien, was erneut einen zusätzlichen Aufwand bedeutet.

Der Erfindung somit liegt das Problem zugrunde, ein vereinfachtes und dennoch zuverlässiges Ankleben von Options- und Anbauteilen an ein Fahrzeug zu ermöglichen, wodurch auf zusätzliche Bohr-, Schleif- oder Schweißarbeiten verzichtet werden kann.

Hierzu wird erfindungsgemäß eine Schnittstelle zur Befestigung von Options- und Anbauteilen mittels eines Klebstoffs an einem Bauteil des Fahrzeugs bereitgestellt, wobei die Schnittstelle durch einen blanken Oberflächenabschnitt an einem Bauteil des Fahrzeugs gebildet ist, der von einem lösbar befestigten Abdeckelement bedeckt ist. Hierbei sind das Abdeckelement und die Umgebung der Schnittstelle an der Oberfläche des Bauteils mit einer gemeinsamen Beschichtung, beispielsweise einer Lackierung oder Pulverbeschichtung, bereitgestellt. Wenn nun entschieden wird, ein Anbauteil an der vorgesehenen Schnittstelle anzubringen, kann einfach das Abdeckelement von dem blanken Oberflächenabschnitt entfernt werden, und die Schnittstelle ist zum Ankleben eines Anbauteils vorbereitet. Vorzugsweise ist die lösbare Befestigung derart gewählt, dass das Abdeckelement eine beliebig lange Zeit an dem Oberflächenabschnitt verbleiben kann, insbesondere auch permanent, so lange kein Anbauteil an der entsprechenden Stelle angebracht werden soll.

Das Entfernen des Abdeckelements kann beispielsweise derart erfolgen, dass es mit Hilfe eines Messers, eines Schraubendrehers oder ähnlicher gebräuchlicher Werkzeuge von der blanken Oberfläche abgehebelt oder abgestemmt wird. Spezielle Werkzeuge sind demnach nicht notwendig.

Der Begriff "blanke Oberfläche" ist im Zusammenhang mit der vorliegenden Erfindung nicht auf eine unlackierte Metalloberfläche beschränkt. Vielmehr umfasst er sämtliche Oberflächenbeschaffenheiten, an denen herkömmliche Klebstoffe eine ausreichende Haftung erzeugen können. Beispielsweise kann, wenn unter der Beschichtung des Bauteils zunächst eine Grundierung aufgetragen wird, das Abdeckelement auch auf der Grundierung sitzen, sofern an dieser eine ausreichende Haftung eines Klebstoffs erzielt werden kann.

Die lösbare Verbindung zwischen der Oberfläche des Bauteils und dem Abdeckelement kann auf verschiedene Arten gebildet sein, und insbesondere kann das Abdeckteil aus einem beliebigen Material bestehen.

Eine vorteilhafte Ausgestaltung der lösbaren Verbindung zwischen der Oberfläche des Bauteils und dem Abdeckelement kann eine Befestigung magnetischer oder elektrostatischer Art sein. Hierbei kann insbesondere das Abdeckelement ein Permanentmagnet, insbesondere ein Ferritmagnet, und die blanke Oberfläche ferromagnetisch sein. Gerade wenn das Bauteil ohnehin aus Stahl oder einem anderen ferromagnetischen Werkstoff gebildet ist, ist diese Art der lösbaren Verbindung sehr kostengünstig, und durch die Wahl des Magneten kann ferner die Festigkeit der lösbaren Verbindung geeignet eingestellt werden.

Ferner ist es auch denkbar, dass die lösbare Verbindung zwischen dem Bauteil und dem Abdeckelement ebenfalls eine Klebeverbindung ist. Hierbei kann ebenfalls die Festigkeit der lösbaren Verbindung durch Wahl des Klebstoffs in Zusammenhang mit dem Material der blanken Oberfläche und dem Material des Abdeckelements geeignet eingestellt werden. Es ist wünschenswert, dass beim Entfernen des Abdeckelements die Klebstoffreste vollständig an diesem verbleiben, damit die Oberfläche sofort die gewünschte Beschaffenheit zum Aufkleben des Anbauteils aufweist. In der Regel wird dies jedoch nicht gelingen, daher kann es nötig sein, Klebstoffreste von der blanken Oberfläche zu entfernen. Da hierzu allerdings kein Schleifen nötig ist, sondern lediglich ein Abschaben der Reste oder der Einsatz von geeignetem Lösungsmittel, das die Beschichtung des Bauteils nicht angreift, besteht hier nicht die Gefahr, die Beschichtung in der Umgebung der Schnittstelle zu beschädigen und damit anfällig für Korrosion zu machen, und es werden auch keine weiteren Werkzeuge benötigt.

Das Abdeckteil kann prinzipiell eine beliebige Form und beliebige Ausmaße aufweisen, wobei dadurch auch die Form und die Ausmaße der Schnittstelle festgelegt werden. Beispielsweise ist eine Kreisform mit einem Durchmesser von zwischen 10 mm und 50 mm, insbesondere von 20 mm, denkbar. Alternativ kann das Abdeckelement auch die Form eines Vielecks aufweisen, insbesondere eines Rechtecks oder eines Quadrats.

Ebenfalls kann die Dicke des Abdeckelements beliebig gewählt sein und insbesondere auf die Schichtdicke der Beschichtung abgestimmt sein, so dass das Abdeckelement unter der Beschichtung einerseits noch gut zu erkennen und problemlos zu entfernen ist, anderseits aber noch nicht so weit vorsteht, dass es eine Behinderung darstellt. Vorzugsweise kann die Dicke bei einer gewöhnlichen Schichtdicke der Beschichtung bei zwischen 1,0 mm und 10 mm, insbesondere bei 1,5 mm, liegen.

In weiteren vorteilhaften Ausführungsformen kann das Abdeckelement an seiner dem Fahrzeug abgewandten Seite gekennzeichnet sein, beispielsweise durch eine Prägung. So lässt sich das Abdeckelement auch unter einer intrasparenten oder/und dicken Beschichtung leicht ausfindig machen.

Ferner kann in einer Ausführungsform an dem Abdeckelement ein Abschnitt vorgesehen sein, der das Entfernen des Abdeckelements von der Oberfläche des Bauteils vereinfacht, beispielsweise ein vorstehender Ansatz, an dem ein Messer oder Schraubendreher zum Abhebeln oder Abstemmen des Abdeckelements ohne die Gefahr eines Abrutschens angesetzt werden kann. Im Gegensatz hierzu kann allerdings auch die dem Bauteil abgewandte Seite des Abdeckelements abgerundet sein, um ein versehentliches Entfernen des Abdeckelements durch ein Abgleiten eines unbeabsichtigt anstoßenden Gegenstands zu verhindern. Schließlich können auch beide vorgenannten Merkmale an einem einzelnen Abdeckelement vorliegen.

Die vorliegende Erfindung betrifft ferner ein Verfahren zum Bereitstellen einer Schnittstelle zur Befestigung von Options- und Anbauteilen an einem Fahrzeug, insbesondere einem Nutzfahrzeug, weiter insbesondere einem Flurförderfahrzeug, mittels eines Klebstoffs, umfassend die Schritte eines Bereitstellens einer blanken Oberfläche an einem Bauteil des Fahrzeugs, eines Anbringens eines Abdeckelements an der blanken Oberfläche mittels einer lösbaren Befestigung, eines gemeinsamen Beschichtens der blanken Oberfläche und des angebrachten Abdeckelements und eines Entfernens des lösbar befestigten Abdeckelements von der Oberfläche.

Weiterhin betrifft die Erfindung ein Verfahren zum Befestigen von Options- und Anbauteilen an einem Fahrzeug, umfassend die genannten Schritte des Bereitstellens einer blanken Oberfläche an einem Bauteil des Fahrzeugs, des Anbringens eines Abdeckelements an der blanken Oberfläche mittels einer lösbaren Befestigung, des gemeinsamen Beschichtens der blanken Oberfläche und des angebrachten Abdeckelements und des Entfernens des lösbar befestigten Abdeckelements von der Oberfläche und ferner den Schritt eines Befestigens eines Options- und Anbauteils an der Schnittstelle mittels eines Klebstoffs.

Weitere Vorteile und Einzelheiten der vorliegenden Erfindung werden mittels der in den folgenden schematischen Figuren dargestellten Ausführungsform exemplarisch näher erläutert.

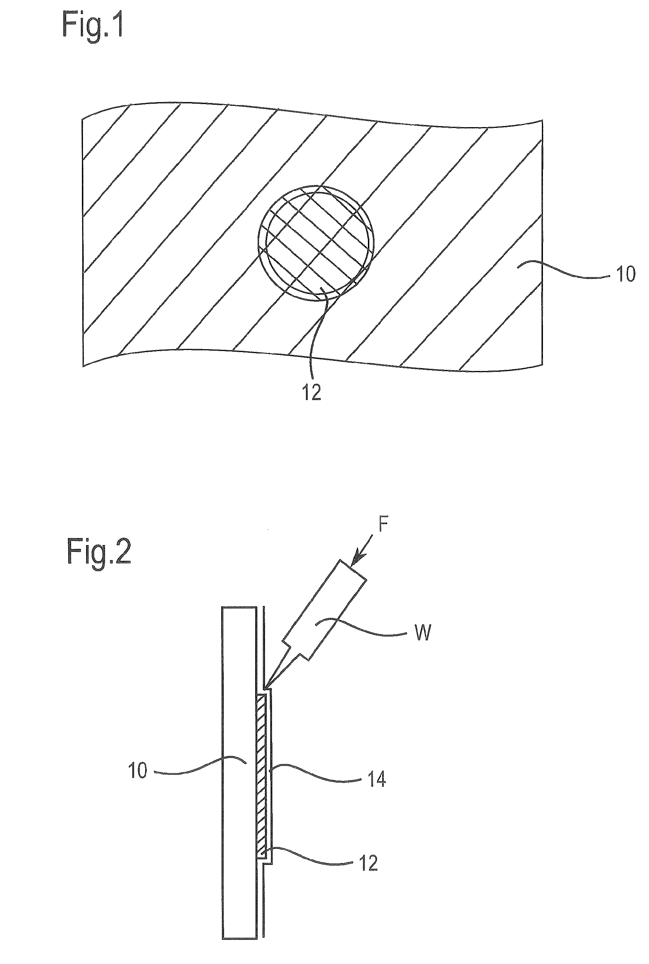

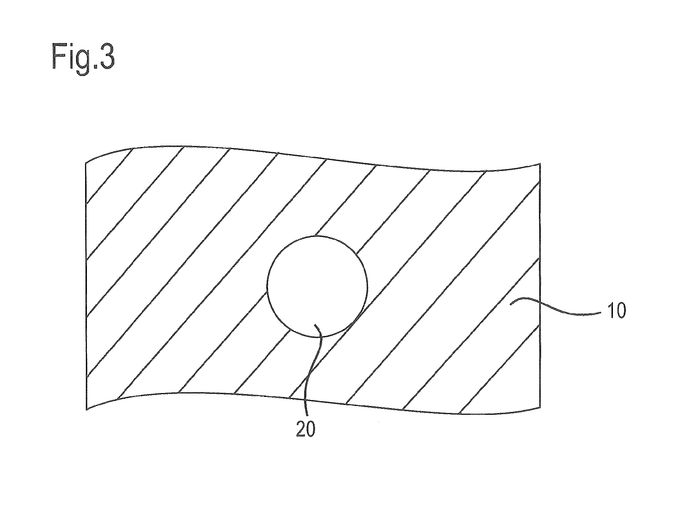

Hierbei zeigt Figur 1 in Draufsicht ein Bauteil eines erfindungsgemäßen Fahrzeugs, an dem ein Abdeckelement angebracht ist, das gemeinsam mit der Oberfläche des Bauteils beschichtet worden ist. Figur 2 zeigt einen Schnitt durch das Bauteil und das gemeinsam mit der Oberfläche des Bauteils beschichtete Abdeckelement aus Figur 1, das gerade mittels eines Werkzeugs von der Oberfläche abgestemmt wird. Figur 3 zeigt die Oberfläche des Bauteils, nachdem das Abdeckelement entfernt worden ist.

In Figur 1 ist ein Bauteil eines erfindungsgemäßen Fahrzeugs ganz allgemein mit dem Bezugszeichen 10 bezeichnet. An der Oberfläche des Bauteils 10 ist ein Abdeckelement 12 befestigt. Die Oberfläche des Bauteils 10 und des Abdeckelements 12 sind gemeinsam mit einer durchgehenden durch eine Schraffierung angedeuteten Beschichtung, z.B. einer Lackierung versehen.

In Figur 2 ist diese Beschichtung mit 14 bezeichnet. Wie in dieser Schnittansicht zu erkennen ist, bedeckt die Beschichtung 14 durchgehend die Oberfläche des Bauteils 10 und das Abdeckelement 12, das unmittelbar mit der Oberfläche des Bauteils 10 in Kontakt steht. Somit ist das Bauteil 10 zuverlässig vor Korrosion geschützt. Ferner ist in Figur 2 ein Werkzeug W zu erkennen, beispielsweise ein Schraubendreher oder ein Messer, mit dessen Hilfe das Abdeckelement 12 von der Oberfläche des Bauteils 10 entfernt werden kann, beispielsweise durch einen gezielten Schlag auf das Ende des Werkzeugs W in Richtung des Pfeils F. Hierbei wird die Beschichtung 14 entlang des Umfangs des Abdeckelements 12 aufgebrochen.

In Figur 3 ist das Bauteil 10 nach Entfernen des Abdeckelements 12 zu sehen. Während die durch Schraffur angedeutete Beschichtung außerhalb des ursprünglich durch das Abdeckelement 12 bedeckten Bereichs vollständig intakt ist, ist in diesem Bereich nun eine Schnittstelle 20 zugänglich, die von einem blanken Oberflächenabschnitt gebildet wird und dazu geeignet ist, dass auf ihr ein Anbauteil angeklebt werden kann.

## Patentansprüche

1. Fahrzeug, insbesondere Nutzfahrzeug, weiter insbesondere Flurförderfahrzeug, umfassend eine Schnittstelle (20) zur Befestigung von Options- und Anbauteilen an dem Fahrzeug mittels eines Klebstoffs,
wobei die Schnittstelle (20) durch einen blanken Abschnitt an einer Oberfläche eines Bauteils (10) des Fahrzeugs gebildet ist, welcher von einem mittels einer lösbaren Befestigung angebrachten Abdeckelement (12) bedeckt ist,
wobei das Abdeckelement (12) und die Umgebung der Schnittstelle (20) an der Oberfläche des Bauteils (10) mit einer gemeinsamen Beschichtung (14) bereitgestellt sind.

2. Fahrzeug nach Anspruch 1, **dadurch gekennzeichnet, dass** die lösbare Befestigung magnetischer oder elektrostatischer Art ist.

3. Fahrzeug nach Anspruch 2, **dadurch gekennzeichnet, dass** das Abdeckelement (12) ein Ferritmagnet und die blanke Oberfläche ferromagnetisch ist.

4. Fahrzeug nach einem der Anspruch 1, **dadurch gekennzeichnet, dass** die lösbare Verbindung eine Klebeverbindung ist.

5. Fahrzeug nach einem der Ansprüche 1 bis 4, **dadurch gekennzeichnet, dass** das Abdeckelement (12) eine Kreisform aufweist.

6. Fahrzeug nach Anspruch 5, **dadurch gekennzeichnet, dass** das Abdeckelement (12) einen Durchmesser von zwischen etwa 10 mm und etwa 50 mm, vorzugsweise von etwa 20 mm aufweist.

7. Fahrzeug nach einem der Ansprüche 1 bis 4, **dadurch gekennzeichnet, dass** das Abdeckelement (12) die Form eines Vielecks, insbesondere eines Rechtecks oder Quadrats, aufweist.

8. Fahrzeug nach einem der Ansprüche 1 bis 7, **dadurch gekennzeichnet, dass** das Abdeckelement (12) eine Dicke von zwischen etwa 1,0 mm und etwa 10 mm, vorzugsweise von etwa 1,5 mm aufweist.

9. Verfahren zum Bereitstellen einer Schnittstelle (20) zur Befestigung von Options- und Anbauteilen an einem Fahrzeug, insbesondere einem Nutzfahrzeug, weiter insbesondere einem Flurförderfahrzeug, mittels eines Klebstoffs, umfassend die Schritte:
- Bereitstellen einer blanken Oberfläche an einem Bauteil (10) des Fahrzeugs;
- Anbringen eines Abdeckelements (12) an der blanken Oberfläche mittels einer lösbaren Befestigung;
- gemeinsames Beschichten der blanken Oberfläche und des daran angebrachten Abdeckelements (12);
- Entfernen des lösbar befestigten Abdeckelements (12) von der Oberfläche;

10. Verfahren nach Anspruch 9, **dadurch gekennzeichnet, dass** die lösbare Befestigung magnetischer oder elektrostatischer Art ist.

11. Verfahren nach Anspruch 10, **dadurch gekennzeichnet, dass** das Abdeckelement (12) ein Ferritmagnet und die blanke Oberfläche ferromagnetisch ist.

12. Verfahren nach Anspruch 9, **dadurch gekennzeichnet, dass** die lösbare Verbindung eine Klebeverbindung ist.

13. Verfahren nach einem Ansprüche 9 bis 12, **dadurch gekennzeichnet, dass** das Abdeckelement (12) eine Kreisform aufweist.

14. Verfahren nach Anspruch 13, **dadurch gekennzeichnet, dass** das Abdeckelement (12) einen Durchmesser von zwischen etwa 10 mm und etwa 50 mm, vorzugsweise von etwa 20 mm aufweist.

15. Verfahren nach einem der Ansprüche 9 bis 12, **dadurch gekennzeichnet, dass** das Abdeckelement (12) die Form eines Vielecks, insbesondere eines Rechtecks oder Quadrats, aufweist.

16. Verfahren nach einem der Ansprüche 9 bis 15, **dadurch gekennzeichnet, dass** das Abdeckelement (12) eine Dicke von zwischen etwa 1 mm und etwa 10 mm, vorzugsweise von etwa 1,5 mm aufweist.

17. Verfahren zum Befestigen von Options- und Anbauteilen an einem Fahrzeug, umfassend die Schritte aus Anspruch 9, sowie gewünschtenfalls weiteren Merkmalen aus den Ansprüchen 10 bis 16, ferner umfassend den Schritt:
- Befestigen eines Options- und Anbauteils an der Schnittstelle (20) mittels eines Klebstoffs.
